# DEMANDE DE BREVET EUROPEEN

(11) **EP 1 471 239 A1**
(43) Date de publication de la demande: **27.10.2004**
(21) Numéro de dépôt: 04300210.4
(22) Date de dépôt: 19.04.2004
(51) Int. Cl.: F02D 41/20, H01L 41/04

(54) **Dispositif de commande d'actuateur piézo-électrique ultrasonore et son procédé de mise en oeuvre**

(30) Priorité: 25.04.2003 FR 0305114
(71) Demandeur: Renault s.a.s., 92100 Boulogne Billancourt (FR)
(72) Inventeur: Ripoll, Christophe, 78220 Viroflay (FR)

(57) **Abrégé**

L'invention concerne un dispositif de commande et son procédé de mise en oeuvre, d'au moins un actuateur piézo-électrique ultrasonore, piloté électroniquement à partir d'un calculateur de contrôle d'une source de tension continue, tel qu'étant alimenté par la source de tension, délivrant une tension continue (E) entre deux bornes extrêmes (B₁, B₂), il comporte, connectée en parallèle auxdites bornes, une inductance de résonance (Lₚ) en série avec un pont de quatre interrupteurs (P₁₁, P₁₂, P₂₁, P₂₂), associés chacun à une diode (d₁₁, d₁₂, d₂₁, d₂₂) destinée à bloquer le passage du courant dans le sens de la charge de l'inductance (Lₚ), ledit pont étant constitué de deux bras, qui comprennent chacun deux interrupteurs en série, (P₁₁ et P₂₁) et (P₁₂ et P₂₂) commandables alternativement, et dont les points milieux respectifs (J₁ et J₂) sont reliés par l'actuateur (Aᵢ).

Application aux véhicules automobiles.

## Description

La présente invention concerne un dispositif de commande d'un actuateur piézo-électrique ultrasonore piloté électriquement, et plus particulièrement d'un injecteur de carburant à étage piézo-électrique piloté par le calculateur d'injection électrique d'un moteur à combustion interne dans un véhicule automobile. Elle concerne de plus un procédé de mise en oeuvre du dispositif.

Plus précisément, le problème que vise à résoudre l'invention est l'excitation des cellules piézo-électriques pour faire vibrer la structure d'un injecteur ultrasonore, telle que décrite dans la demande de brevet français, déposée sous le numéro 99 14548 au nom de la Demanderesse. Ce type d'injecteur pulvérise très finement le carburant en gouttelettes calibrées pour assurer un dosage précis et suffisamment petites pour assurer la vaporisation complète et homogène du carburant injecté. Un tel injecteur ultrasonore comporte entre autres une buse cylindrique alimentée en carburant et à l'extrémité de laquelle est ménagé un orifice d'injection, et des moyens de mise en vibration cyclique de la buse, tel un transducteur, comportant un étage en céramique piézo-électrique aux bornes de laquelle on fait varier la tension électrique pour modifier son épaisseur entre deux positions extrêmes correspondant à l'ouverture et à la fermeture de l'injecteur, à un rapport de démultiplication près. Une céramique piézo-électrique d'injecteur est équivalente au premier ordre à une capacité dont la tension de chargement est élevée, supérieure à une centaine de volts.

Dans un véhicule automobile, la tension d'alimentation a pour valeur 12 ou 42 volts, ce qui implique d'augmenter cette tension pour assurer la charge et la décharge de la céramique.

Il existe actuellement différentes topologies de dispositifs de commande pour injecteur piézo-électrique, dont les topologies à transformateur qui ont pour inconvénients d'être chères à réaliser et de présenter un couplage de la résonance électrique avec la résonance magnétique. Il existe également des topologies sans transformateur, donc sans isolation galvanique, dont un exemple de réalisation est décrit dans la demande de brevet français, déposée sous le numéro 02 14665, au nom de Renault. Cette demande propose un dispositif de commande qui comporte :
- un premier étage, alimenté par la source de tension continue, d'amplification de ladite tension pour générer une haute tension ;
- un deuxième étage, alimenté par la haute tension générée par le premier étage, de génération d'une source de courant pour alimenter les injecteurs ;
- d'un troisième étage de sélection des injecteurs piézo-électriques à piloter;
- un quatrième étage de pilotage de la tension d'excitation Vₚᵢ des injecteurs.

Le premier étage de génération d'une haute tension est constitué par une première branche comprenant une première inductance L₁ reliée à un interrupteur S₁ de découpage, monté en anti-parallèle avec une diode d₁ de roue libre, et par une deuxième branche montée en parallèle sur l'interrupteur S₁ de découpage et comprenant une diode D reliée à une capacité de filtrage C, une des bornes de ladite diode D étant reliée au point de jonction J₁ de l'inductance L₁ et de l'interrupteur S₁ de la première branche, la haute tension d'alimentation étant délivrée aux bornes de la capacité C.

Quant au deuxième étage de génération d'une source de courant, il est constitué par une branche comprenant une seconde inductance L₂ reliée à un interrupteur S₂ de découpage monté en anti-parallèle avec une diode d₂ de roue libre, ladite inductance L₂ de valeur déterminée pour réaliser un circuit oscillant avec chaque injecteur piloté étant reliée d'un côté au point de jonction J₂ de la diode D avec la capacité de filtrage du premier étage et de l'autre côté à l'interrupteur S₂ .

Le but de l'invention est de proposer une nouvelle topologie sans transformateur, simplifiée par rapport à l'art antérieur, n'ayant qu'un seul élément selfique pour générer une tension alternative aux bornes d'un injecteur à partir d'une source de tension continue.

Pour cela, un premier objet de l'invention est un dispositif de commande d'au moins un actuateur piézo-électrique ultrasonore, piloté électroniquement à partir d'un calculateur de contrôle et d'une source de tension continue, caractérisé en ce qu'étant alimenté par la source de tension, délivrant une tension de sortie continue E entre deux bornes extrêmes B₁, B₂, il comporte, connectée en parallèle auxdites bornes, une inductance de résonance Lₚ en série avec un pont de quatre interrupteurs P₁₁, P₁₂, P₂₁, P₂₂, associés chacun à une diode d₁₁, d₁₂, d₂₁, d₂₂ destinée à bloquer le passage du courant dans un seul et même sens, celui de la charge de l'inductance Lₚ, ledit pont étant constitué de deux bras, qui comprennent chacun deux interrupteurs en série, P₁₁ et P₂₁ d'une part et P₁₂ et P₂₂ d'autre part, commandables alternativement, et dont les points milieux respectifs J₁ et J₂ sont reliés par l'actuateur piézo-électrique Aᵢ.

Selon une autre caractéristique du dispositif de commande alimenté par la source de tension, délivrant une tension de sortie continue E entre deux bornes extrêmes B₁, B₂, celui-ci comporte, connectée en parallèle auxdites bornes, une inductance de résonance Lₚ en série avec une diode D, passante dans le sens de la charge de ladite inductance, et avec un pont de quatre interrupteurs P₁₁, P₁₂, P₂₁, P₂₂, associés chacun à une diode d₁₁ , d₁₂, d₂₁, d₂₂ destinée à bloquer le passage du courant dans un seul et même sens, montée dans le sens inverse de la diode D associée à l'inductance, ledit pont étant constitué de deux bras, qui comprennent chacun deux interrupteurs en série, P₁₁ et P₂₁ d'une part et P₁₂ et P₂₂ d'autre part, commandables alternativement, et dont les points milieux respectifs J₁ et J₂ sont reliés par l'actuateur piézo-électrique Aᵢ.

Un second objet de l'invention est un procédé de mise en oeuvre du dispositif de commande d'au moins un actuateur piézo-électrique ultrasonore, caractérisé en ce qu'il comporte les étapes suivantes pour obtenir une tension alternative avec composante continue aux bornes de l'injecteur piézo-électrique, le calculateur de contrôle réalise les étapes suivantes :
- A) fermeture simultanée d'un premier couple d'interrupteurs constitué d'un premier interrupteur P₁₁ du premier bras de pont et du second interrupteur P₂₂ du second bras de pont, et ouverture simultanée du second couple constitué du second interrupteur P₁₂ du premier bras et du premier interrupteur P₂₁ du second bras ;
- B) fermeture du second interrupteur P₂₁ du premier bras pour accumuler de l'énergie dans l'inductance de résonance Lₚ ;
- C) ouverture de ce même second interrupteur P₂₁ du premier bras pour que l'inductance Lₚ se décharge dans l'actuateur qui se charge ainsi à son tour ;
- D) ouverture simultanée du premier couple d'interrupteurs fermés P₁₁ et P₂₂ ;
- E) fermeture simultanée du second couple d'interrupteurs ouverts P₁₂ et P₂₁ pour permettre à la tension aux bornes de l'actuateur de s'inverser par l'inductance Lₚ ;
- F) fermeture du second interrupteur P₂₂ du second bras pour accumuler de l'énergie dans l'inductance ;
- G) ouverture de ce même interrupteur P₂₂ du second bras pour charger l'actuateur une nouvelle fois par l'énergie accumulée dans l'inductance ;
- H) ouverture simultanée du second couple d'interrupteurs P₁₂ et P_{21;}
- l) fermeture simultanée du premier couple d'interrupteurs P₁₁ et P₂₂ pour permettre à la tension aux bornes de l'actuateur de s'inverser par l'inductance Lₚ ;
   le cycle se poursuit de l'étape B) à l'étape I).

D'autres caractéristiques et avantages de l'invention apparaîtront à la lecture de la description de deux variantes de réalisation d'un dispositif de commande d'un actuateur piézo-électrique, illustrée par les figures suivantes qui sont :
- les figures 1 et 2 : un schéma électronique d'un dispositif de commande d'un actuateur piézo-électrique, selon deux variantes ;
- les figures 3a, 3b, 3c et 3d : les signaux de commande des quatre interrupteurs de pont du dispositif de commande ;
- les figures 4 et 5 : les variations temporelles respectives du courant dans l'inductance de charge et de la tension aux bornes de l'injecteur;
- les figures 6 et 7 : un schéma électronique d'un dispositif de commande de quatre actuateurs piézo-électriques, selon deux variantes.

Les éléments portant les mêmes références sur les différentes figures remplissent les mêmes fonctions en vue des mêmes résultats.

L'invention consiste à générer un signal sinusoïdal haute tension, supérieure à une centaine de volts, et haute fréquence, supérieure à une dizaine de kilohertz, sur la cellule piézo-électrique de chaque injecteur de carburant d'un véhicule à partir d'une source de tension continue, soit la batterie. Pour cela, elle propose deux variantes différentes d'une topologie de dispositif de commande d'un actuateur assurant l'excitation desdites céramiques piézo-électriques, à travers une inductance pour constituer un circuit résonant. Ces structures sont valables de 1 à N injecteurs, N étant un entier préférentiellement égal à 4, 5, 6, 8, 10 ou 12. A titre d'exemple non limitatif, le nombre d'injecteurs commandés est 4 dans la description suivante.

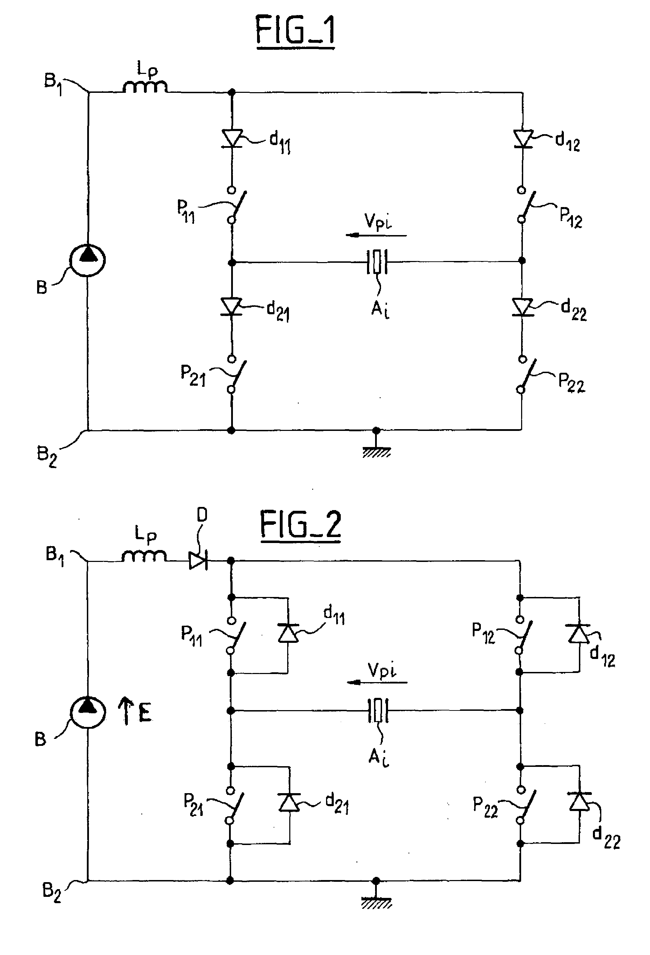

Comme le montre le schéma de la figure 1, concernant une première variante de réalisation, le dispositif de commande d'un actuateur piézo-électrique Aᵢ selon l'invention est alimenté par une source B de tension continue, telle qu'une batterie électrique 12 Volts ou 42 Volts du véhicule, ou un convertisseur DC-DC, qui délivre une tension continue E entre ses deux bornes extrêmes B₁ et B₂. Entre ces deux bornes, en parallèle à cette source de tension est connectée une inductance de résonance Lₚ en série avec un pont de quatre interrupteurs P₁₁, P₁₂, P₂₁, P₂₂ , associés chacun à une diode d₁₁ , d₁₂, d₂₁, d₂₂ destinée à bloquer le passage du courant dans un seul et même sens, celui de la charge de l'inductance Lₚ . L'inductance et l'ensemble des quatre diodes réalisent une source de courant unidirectionnelle. Le pont est constitué de deux bras, comprenant chacun deux interrupteurs en série, P₁₁ et P₂₁ d'une part et P₁₂ et P₂₂ d'autre part, commandables alternativement, et dont les points milieux respectifs J₁ et J₂ sont reliés par l'actuateur piézo-électrique Aᵢ.

L'inductance de résonance Lₚ est dimensionnée pour que sa fréquence de résonance avec la capacité d'entrée de l'actuateur piézo-électrique soit supérieure à la fréquence de récurrence des interrupteurs, soit la fréquence de pilotage ultrasonique des injecteurs piézo-électriques. Ainsi, le principe de fonctionnement du dispositif repose à la fois sur le caractère réactif de l'inductance Lₚ et de l'impédance d'entrée de l'actuateur sélectionné, ainsi que sur la charge et la décharge rapide(s) du piézo-électrique par une inductance dimensionnée pour que sa résonance avec la capacité d'entrée de l'injecteur ait lieu à une fréquence plus grande que la fréquence de répétition du motif en tension désirée.

Le fonctionnement de ce dispositif de commande, pour obtenir une tension alternative avec composante continue aux bornes de l'injecteur piézo-électrique, comporte les étapes suivantes :
- A) fermeture simultanée d'un premier couple d'interrupteurs constitué d'un premier interrupteur P₁₁ du premier bras de pont et du second interrupteur P₂₂ du second bras de pont, et ouverture simultanée du second couple constitué du second interrupteur P₁₂ du premier bras et du premier interrupteur P₂₁ du second bras ;
- B) fermeture du second interrupteur P₂₁ du premier bras pour accumuler de l'énergie dans l'inductance de résonance Lₚ ;
- C) ouverture de ce même second interrupteur P₂₁ du premier bras pour que l'inductance Lₚ se décharge dans l'actuateur Aᵢ qui se charge ainsi à son tour ;
- D) ouverture simultanée du premier couple d'interrupteurs fermés P₁₁ et P₂₂;
- E) fermeture simultanée du second couple d'interrupteurs ouverts P₁₂ et P₂₁ pour permettre à la tension aux bornes de l'actuateur de s'inverser par l'inductance Lₚ ;
- F) fermeture du second interrupteur P₂₂ du second bras pour accumuler de l'énergie dans l'inductance ;
- G) ouverture de ce même interrupteur P₂₂ du second bras pour charger l'actuateur une nouvelle fois par l'énergie accumulée dans l'inductance ;
- H) ouverture simultanée du second couple d'interrupteurs P₁₂ et P₂₁ ;
- I) réitération de l'étape A) soit fermeture simultanée du premier couple d'interrupteurs P₁₁ et P₂₂ pour permettre à la tension aux bornes de l'actuateur de s'inverser par l'inductance Lₚ,
le cycle se poursuivant ensuite de l'étape B) à l'étape I).

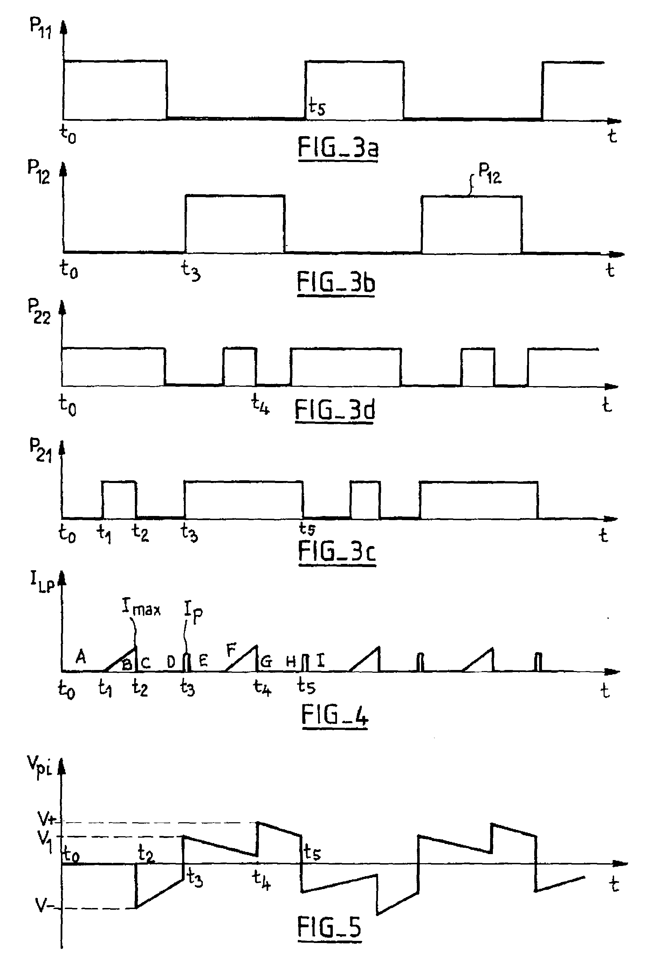

Les figures 3a et 3b représentent les signaux de commande d'ouverture et de fermeture des premiers interrupteurs P₁₁ et P₁₂ respectivement des deux bras de pont, et les figures 3c et 3d représentent les signaux de commande d'ouverture et de fermeture des seconds interrupteurs P₂₁ et P₂₂ respectivement des deux bras de pont.

Le pilotage des quatre interrupteurs du pont aboutit au courant I_{Lp} circulant dans l'inductance de résonance Lₚ représenté sur la figure 4 et à la tension d'excitation Vₚᵢ de l'actuateur piézo-électrique A représentée sur la figure 5. Lors de l'étape B), entre les instants t₁ et t₂, le courant I_{Lp} croît dans l'inductance Lₚ jusqu'à une valeur maximale Iₘₐₓ, puis chute brutalement à la valeur nulle à l'instant t₂ de début de l'étape C). A l'instant t₃ de début de l'étape E), le courant I_{Lp} présente un pic de valeur Iₚ, correspondant à l'inversion de la polarité de l'actuateur par la résonance entre l'inductance Lₚ et la capacité d'entrée de l'actuateur.

Simultanément, la tension d'excitation Vₚᵢ de l'actuateur, nulle jusqu'à l'instant t₂ décroît brutalement jusqu'à une valeur très négative V-, de l'ordre par exemple de - 250 Volts, puis croît progressivement entre les instants t₂ et t₃ pour ensuite, à l'instant t₃ d'inversion de polarité de l'actuateur, croître jusqu'à une première valeur V₁, décroître jusqu'à l'instant t₄, puis croître jusqu'à une valeur maximale V+, de valeur absolue égale à V-, correspondant à la charge de l'actuateur par l'inductance Lₚ. Entre les instants t₄ et t₅ de fin d'étape H), la tension d'excitation Vₚᵢ décroît puis bascule à la valeur négative V-.

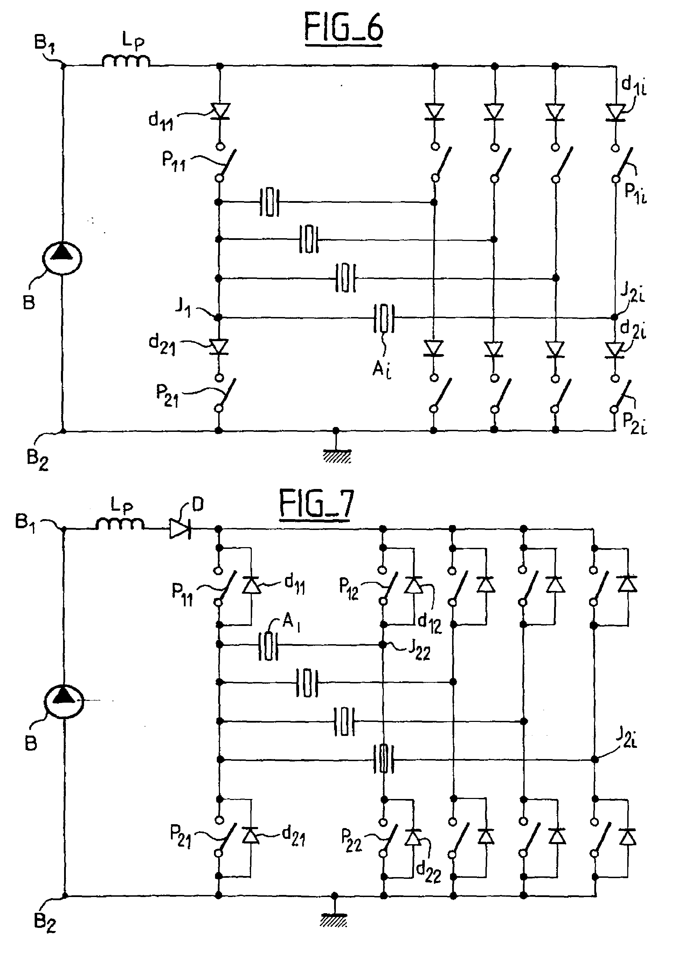

Dans le cas d'un moteur thermique de véhicule automobile nécessitant quatre injecteurs, le schéma de la figure 6 représente un dispositif de commande de quatre actuateurs en céramique piézo-électrique A₁ à A₄ , montés en parallèle et, qui selon cette première variante de réalisation, comporte d'une part un premier bras de pont, monté en série avec une inductance de résonance Lₚ, et d'autre part quatre deuxièmes bras, montés en parallèle au premier bras. Chaque actuateur piézo-électrique A₁ à A₄ relie le point milieu J₁ du premier bras de pont au point milieu J₂ᵢ d'un des quatre seconds bras de pont respectivement. Chaque bras de pont est constitué de deux interrupteurs P₁₁ et P₂₁ pour le premier bras, et P₁ᵢ et P₂ᵢ, i entier variant de 1 à 4, pour chacun des quatre seconds bras, chaque interrupteur étant associé à une diode, d₁ᵢ ou d₂ᵢ, destinée à bloquer le passage du courant dans un seul et même sens, celui de la charge de l'inductance Lₚ.

Selon une seconde variante de réalisation, comme le montre le schéma de la figure 2, le dispositif de commande d'un actuateur piézo-électrique Aᵢ selon l'invention est alimenté par une source B de tension continue, qui délivre une tension continue E entre ses deux bornes extrêmes B₁ et B₂. En parallèle desdites bornes est connectée une inductance de résonance Lₚ en série avec une diode D, passante dans le sens de la charge de ladite inductance, et avec un pont de quatre interrupteurs P₁₁, P₁₂, P₂₁, P₂₂, associés chacun à une diode d₁₁, d₁₂, d₂₁, d₂₂ destinée à bloquer le passage du courant dans un seul et même sens, montée dans le sens inverse de la diode D associée à l'inductance. Comme dans la première variante, le pont est constitué de deux bras, comprenant chacun deux interrupteurs en série, P₁₁ et P₂₁ d'une part et P₁₂ et P₂₂ d'autre part, commandables alternativement, et dont les points milieux respectifs J₁ et J₂ sont reliés par l'actuateur piézo-électrique Aᵢ.

Le schéma de la figure 7 représente un dispositif de commande de quatre actuateurs en céramique piézo-électrique A₁ à A₄ , montés en parallèle selon la seconde variante de réalisation, qui comporte d'une part un premier bras de pont, monté en série avec une inductance de résonance Lₚ associé à une diode D, et d'autre part quatre deuxièmes bras, montés en parallèle au premier bras. Chaque actuateur piézo-électrique A₁ à A₄ relie le point milieu J₁ du premier bras de pont au point milieu J₂ᵢ d'un des quatre seconds bras de pont respectivement. Comme dans la première variante, chaque bras de pont est constitué de deux interrupteurs P₁₁ et P₂₁ pour le premier bras, et P₁ᵢ et P₂ᵢ , i entier variant de 1 à 4, pour chacun des quatre seconds bras, chaque interrupteur étant associé à une diode, d₁ᵢ ou d₂ᵢ , destinée à bloquer le passage du courant dans un seul et même sens, celui de la charge de l'inductance Lₚ .

Le fonctionnement de ce dispositif de commande selon la seconde variante, pour obtenir une tension alternative avec composante continue aux bornes de l'injecteur piézo-électrique, comporte les mêmes étapes que celui du dispositif selon la première variante.

Le procédé de fonctionnement d'un tel dispositif de commande de plusieurs actuateurs piézo-électriques, selon la première ou la seconde variante de réalisation, comporte une première phase de sélection de l'actuateur Aᵢ à exciter puis une deuxième phase d'excitation dudit actuateur par les différentes étapes A) à H) décrites précédemment pour la commande d'un seul actuateur.

## Revendications

1. Dispositif de commande d'au moins un actuateur piézo-électrique ultrasonore, piloté électroniquement à partir d'un calculateur de contrôle d'une source de tension continue, **caractérisé en ce qu'**étant alimenté par la source de tension, délivrant une tension de sortie continue (E) entre deux bornes extrêmes (B₁, B₂), il comporte, connectée en parallèle auxdites bornes, une inductance de résonance (Lₚ) en série avec un pont de quatre interrupteurs (P₁₁, P₁₂, P₂₁, P₂₂), associés chacun à une diode (d₁₁, d₁₂, d₂₁, d₂₂) destinée à bloquer le passage du courant dans un seul et même sens, celui de la charge de l'inductance (Lₚ) , ledit pont étant constitué de deux bras, qui comprennent chacun deux interrupteurs en série, (P₁₁ et P₂₁) d'une part et (P₁₂ et P₂₂) d'autre part, commandables alternativement, et dont les points milieux respectifs (J₁ et J₂) sont reliés par l'actuateur piézo-électrique (Aᵢ).

2. Dispositif de commande d'au moins un actuateur piézo-électrique ultrasonore, piloté électroniquement à partir d'un calculateur de contrôle d'une source de tension continue, **caractérisé en ce qu'**étant alimenté par la source de tension, délivrant une tension de sortie continue (E) entre deux bornes extrêmes (B₁, B₂), il comporte, connectée en parallèle auxdites bornes, une inductance de résonance (Lₚ) en série avec une diode (D), passante dans le sens de la charge de ladite inductance, et avec un pont de quatre interrupteurs (P₁₁, P₁₂, P₂₁, P₂₂) , associés chacun à une diode (d₁₁, d₁₂, d₂₁, d₂₂) destinée à bloquer le passage du courant dans un seul et même sens, montée dans le sens inverse de la diode (D) associée à l'inductance, ledit pont étant constitué de deux bras, qui comprennent chacun deux interrupteurs en série, (P₁₁ et P₂₁) d'une part et (P₁₂ et P₂₂) d'autre part, commandables alternativement, et dont les points milieux respectifs (J₁ et J₂) sont reliés par l'actuateur piézo-électrique (Aᵢ).

3. Dispositif de commande d'au moins un actuateur piézo-électrique ultrasonore selon l'une des revendications 1 ou 2, **caractérisé en ce que** l'inductance de résonance (Lₚ) est dimensionnée pour que sa fréquence de résonance avec la capacité d'entrée de l'actuateur piézo-électrique (Aᵢ) soit supérieure à la fréquence de récurrence des interrupteurs, soit la fréquence de pilotage ultrasonique des injecteurs piézo-électriques.

4. Dispositif de commande d'au moins un actuateur piézo-électrique ultrasonore, selon la revendication 1, **caractérisé en ce que**, pour la commande de quatre actuateurs en céramique piézo-électrique (A₁ à A₄), montés en parallèle, il comporte, connectée en parallèle auxdites bornes extrêmes (B₁, B₂) de la source de tension, une inductance de résonance (Lₚ) en série avec d'une part un premier bras de pont, et d'autre part quatre deuxièmes bras de pont, montés en parallèle au premier bras, et **en ce que** chaque actuateur piézo-électrique (A₁ à A₄) relie le point milieu (J₁) du premier bras de pont au point milieu (J₂ᵢ) d'un des quatre seconds bras de pont respectivement, chaque bras de pont étant constitué de deux interrupteurs (P₁₁ et P₂₁) pour le premier bras, et (P₁ᵢ et P₂ᵢ) , i entier variant de 1 à 4, pour chacun des quatre seconds bras, chaque interrupteur étant associé à une diode (d₁ᵢ ou d₂ᵢ) destinée à bloquer le passage du courant dans un seul et même sens, celui de la charge de l'inductance (Lₚ) .

5. Dispositif de commande d'au moins un actuateur piézo-électrique ultrasonore selon la revendication 2, **caractérisé en ce que**, pour la commande de quatre actuateurs en céramique piézo-électrique (A₁ à A₄), montés en parallèle, il comporte, d'une part un premier bras de pont, monté en série avec une inductance de résonance (Lₚ) associée à une diode (D), et d'autre part quatre deuxièmes bras, montés en parallèle au premier bras, chaque actuateur piézo-électrique (A₁ à A₄) reliant le point milieu (J₁) du premier bras de pont au point milieu (J₂ᵢ) d'un des quatre seconds bras de pont respectivement, et **en ce que** chaque bras de pont est constitué de deux interrupteurs (P₁₁ et P₂₁) pour le premier bras, et (P₁ᵢ et P₂ᵢ) , i entier variant de 1 à 4, pour chacun des quatre seconds bras, chaque interrupteur étant associé à une diode, (d₁ᵢ ou d₂ᵢ) , destinée à bloquer le passage du courant dans un seul et même sens, celui de la charge de l'inductance (Lₚ).

6. Dispositif de commande d'au moins un actuateur piézo-électrique ultrasonore selon l'une des revendications précédentes, **caractérisé en ce que** la source de tension (B) est une batterie basse tension 12 ou 42 Volts ou un alternateur.

7. Dispositif de commande d'au moins un actuateur piézo-électrique ultrasonore selon l'une des revendications précédentes, **caractérisé en ce que** les interrupteurs de pont sont du type MOSFET avec diode intrinsèque ou IGBT ou transistor.

8. Procédé de mise en oeuvre d'un dispositif de commande d'au moins un actuateur piézo-électrique ultrasonore selon les revendications 1 à 7, **caractérisé en ce que**, pour obtenir une tension alternative avec composante continue aux bornes de l'injecteur piézo-électrique, le calculateur de contrôle réalise les étapes suivantes :
- A) fermeture simultanée d'un premier couple d'interrupteurs constitué d'un premier interrupteur (P₁₁) du premier bras de pont et du second interrupteur (P₂₂) du second bras de pont, et ouverture simultanée du second couple constitué du second interrupteur (P₁₂) du premier bras et du premier interrupteur (P₂₁) du second bras ;
- B) fermeture du second interrupteur (P₂₁) du premier bras pour accumuler de l'énergie dans l'inductance de résonance (Lₚ) ;
- C) ouverture de ce même second interrupteur (P₂₁) du premier bras pour que l'inductance (Lₚ) se décharge dans l'actuateur qui se charge ainsi à son tour ;
- D) ouverture simultanée du premier couple d'interrupteurs fermés (P₁₁ et P₂₂) ;
- E) fermeture simultanée du second couple d'interrupteurs ouverts (P₁₂ et P₂₁) pour permettre à la tension aux bornes de l'actuateur de s'inverser par l'inductance (Lₚ) ;
- F) fermeture du second interrupteur (P₂₂) du second bras pour accumuler de l'énergie dans l'inductance ;
- G) ouverture de ce même interrupteur (P₂₂) du second bras pour charger l'actuateur une nouvelle fois par l'énergie accumulée dans l'inductance ;
- H) ouverture simultanée du second couple d'interrupteurs (P₁₂ et P₂₁);
- I) fermeture simultanée du premier couple d'interrupteurs (P₁₁ et P₂₂) pour permettre à la tension aux bornes de l'actuateur de s'inverser par l'inductance (Lₚ) ;
le cycle se poursuit de l'étape B) à l'étape I).

9. Procédé de mise en oeuvre d'un dispositif de commande de plusieurs actuateurs de commande de plusieurs actuateurs piézo-électriques ultrasonores selon l'une des revendications 1 à 7, **caractérisé en ce qu'**il comporte une première phase de sélection de l'actuateur (Aᵢ) à exciter et une deuxième phase d'excitation dudit actuateur comprenant les étapes A) à H).
